# EUROPÄISCHE PATENTSCHRIFT

(11) **EP 0 449 002 B1**
(45) Veröffentlichungstag und Bekanntmachung des Hinweises auf die Patenterteilung: **09.03.1994**
(21) Anmeldenummer: 91103446.0
(22) Anmeldetag: 07.03.1991
(51) Int. Cl.: B29C 45/40

(54) **Vorrichtung zum Entnehmen von Spritzgiessteilen**
Apparatus for taking out injection moulded objects
Dispositif pour enlever des objets moulés par injection

(30) Priorität: 15.03.1990 DE 4008310
(43) Veröffentlichungstag der Anmeldung: 02.10.1991
(73) Patentinhaber: Krauss-Maffei Aktiengesellschaft, 80997 München (DE)
(72) Erfinder: Eichlseder, Martin, D-8399 Tettenweis (DE); Lichtinger, Peter, Ing. (grad.), D-8080 Fürstenfeldbruck (DE)

(56) Entgegenhaltungen:
- EP-A- 0 017 104
- DE-A- 1 629 177
- FR-A- 2 115 099
- GB-A- 572 266
- GB-A- 2 065 544

## Beschreibung

Die Erfindung bezieht sich auf eine Vorrichtung zum Entnehmen von Spritzgießteilen gemäß dem Oberbegriff des Patentanspruchs 1.

Bei bekannten Entnahmesystemen wird nach dem Spritzgießvorgang das Werkzeug bzw. die Form geöffnet und ein automatischer Greifer und eine Saugvorrichtung an das Spritzgießteil herangefuhrt. Mittels Vakuum wird das Spritzgießteil aus der Form herausgesaugt, so daß es vom Greifer übernommen werden kann. Daraufhin wird die Saugvorrichtung zurückgefahren und der Greifer mit dem Spritzgießteil aus dem Formbereich herausgeführt. Anschließend wird die Form für einen neuen Spritzgießvorgang wieder geschlossen.

Das bekannte Entnahmesystem beinhaltet somit eine Reihe von Arbeitsgängen, die material,-platz-und insbesondere zeitaufwendig sind. Außerdem kann die Oberfläche des Spritzgießteils durch Saugerabrieb bzw. verschmutzte Sauger oder durch statische Aufladung im Saugbereich verschmutzt werden, was insbesondere bei der Herstellung von optischen Datenträgern zu vermeiden ist. Beim Berühren des Artikels durch Entnahmesauger entstehen durch Temperaturunterschiede zwischen den kalten Saugern und dem warmen Artikel zusätzlich Wärmespannungen im Artikel, die bei optischen Datenträgern zu unerwünschten Doppelbrechungen bzw. zu einem Gangunterschied führen können.

Das Dokument DE-A-1 629 177 zeigt eine Vorrichtung zur Herstellung von Hohlgegenständen aus thermoplastischen Kunststoffen. Hierbei werden die Spritzgießteile aus einer zweiteiligen Spritzgießform mit gegeneinander verschiebbaren Formteilen entnommen. Zwischen den Formteilen befindet sich eine von einer Welle drehbar getragene Mittelplatte mit zwei diametral einander gegenüberliegenden Aufnahmehöhlungen zur Aufnahme und anschließenden Entnahme der Spritzgießteile.

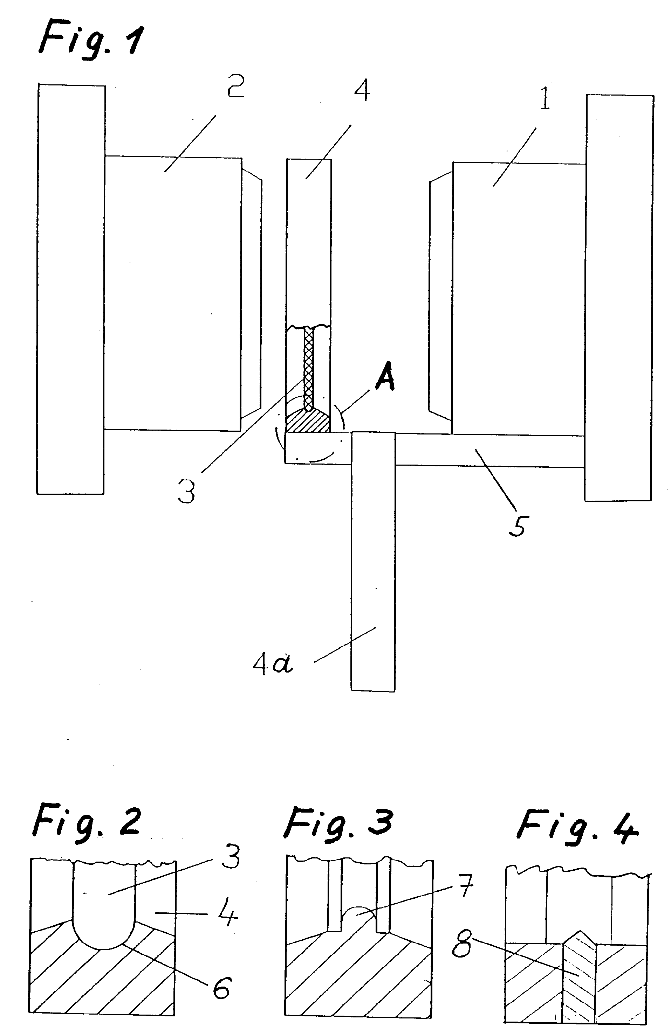

Eine derartige Vorrichtung ist jedoch für eine Auf- und Entnahme von scheibenartigen Spritzgießteilen nach Art von optischen Datenträgern mit sehr hohen Anforderungen an die Oberflächenqualität nicht geeignet. Würde man nach dem in Fig. 1 des Dokuments dargestellten Beispiel eine als optischen Datenträger ausgebildete Scheibe radial aus dem Formbereich herausbewegen, so müßte die Scheibe nach seitlichem Wegfahren der ersten Formhälfte an der fest angeordneten zweiten Formhälfte entlang schleifen. Hierdurch würde die Scheibe beschädigt und unbrauchbar werden. Außerdem läßt die dargestellte Aufnahmehöhlung keine sichere Aufnahme bzw. ein sicheres Halten eines derart flachen Spritzgießteils zu, wie es ein optischer Datenträger ist.

Der Erfindung liegt daher die Aufgabe zugrunde, eine Vorrichtung zu schaffen, mit der scheibenartige Spritzgießteile nach Art optischer Datenträger beim Spritzgießen sicher aufgenommen und gehalten und anschließend ohne Beschädigung oder Beeinträchtigung ihrer Oberflächen entnommen werden können.

Diese Aufgabe wird gemäß den Merkmalen des Patentanspruchs 1 gelöst.

Die durch die Formteile und den Haltering gebildete Zentriereinheit ermöglicht eine besonders genaue Zentrierung, die den hohen Präzisionsanforderungen beim Herstellen optischer Datenträger gerecht wird. Die exzentrische Anordnung des um die Achse der Traverse verschwenkbaren Halterings ermöglicht eine schnelle Entnahme des Spritzgießteils, wobei die axiale Verschiebbarkeit des Halterings gewährleistet, daß das Spritzgießteil ohne Beschädigung oder Verschmutzung entnommen werden kann. Die bis zur Entnahme des Spritzgießteils erforderliche sichere Halterung desselben wird dabei durch die Haltegeometrie erzielt.

Durch die Erfindung wird außerdem die Zahl der Arbeitsgänge gegenüber dem bekannten Absaugverfahren verringert, wobei der Wegfall des Absaugens die geforderte Reinhaltung der Artikeloberfläche begünstigt sowie eine Verminderung von thermischen Spannungen im Artikel ermöglicht.

Durch eine entsprechende Formgebung des Innendurchmessers des Halteringes kann z.B. die Außenkontur von optischen Datenträgern ohne weiteres rund gestaltet werden. Ferner ist eine bessere Lackierung durch Schonung der Kanten sowie eine Randlackierung bis zur Hälfte der Plattendicke möglich.

Weitere vorteilhafte Ausgestaltungen der Erfindung werden mit den Unteransprüchen vorgeschlagen.

Durch die Anordnung mehrerer Halteringe können diese wechselseitig im Spritzgießzyklus eingesetzt werden. Je nach Teilung bzw. Verweilzeit der Halteringe außerhalb der Spritzform kann diese Zeit vorteilhaft als Kühlzeit bzw. Kühlstrecke bis zum Entnahmezeitpunkt genutzt werden. Gleichzeitig kann eine optimale statische Entladung des Artikels stattfinden.

Um ein vorzeitiges Herausfallen des Artikels aus dem Haltering infolge des beim Abkühlen erfolgendem Schrumpfvorganges zu vermeiden, können am Innendurchmesser der Halteringe vorteilhaft radial bewegliche Haltestifte und/oder umlaufende Vorsprünge bzw. Nuten vorgesehen werden.

Ein Ausführungsbeispiel der Erfindung ist in der Zeichnung dargestellt. Es zeigen
- Fig. 1: eine Seitenansicht einer Spritzgießform mit einer Entnahmevorrichtung in schematischer Darstellung,
- Fig. 2: den Ausschnitt A aus Fig. 1 in vergrößerter Darstellung eines Halteringes,
- Fig. 3: eine Alternative zu Fig. 2,
- Fig. 4: eine weitere Alternative zu Fig. 2 und 3.

Fig. 1 zeigt eine zweiteilige Spritzgießform mit gegeneinander verschiebbaren Formteilen 1 und 2. Eine mit dem Formteil 1 verbundene Traverse 5 trägt einen Haltering 4, welcher um die Achse der Traverse 5 drehbar und auf dieser axial verschiebbar angeordnet ist. Position 4a zeigt den gegenüber Position 4 um 180° aus der Form herausgeschwenkten und axial verschobenen Haltering. Im Haltering 4 ist ein Spritzgießteil 3 gehalten. Der in Fig. 2 ausschnittweise vergrößert dargestellte Haltering 4 ist mit einer umlaufenden Nut 6 versehen. Fig. 3 zeigt den Haltering 4 in entsprechender Darstellung mit einem umlaufenden Vorsprung 7. Gemäß Fig. 4 ist am Innendurchmesser des Halterings 4 ein radial beweglicher Haltestift 8 vorgesehen, der zum Entnehmen des Spritzgießteils 3 radial nach außen bewegt wird.

## Patentansprüche

1. Vorrichtung zum Entnehmen von Spritzgießteilen, insbesondere optische Datenträger, aus einer zwei-oder mehrteiligen Spritzgießform mit gegeneinander verschiebbaren und zueinander zentrierten Formteilen (1,2), wobei zwischen den Formteilen (1,2) ein in der Trennebene der Form radial beweglicher Haltering (4) zum Halten von Spritzgießteilen (3) angeordnet ist, dessen Innendurchmesser dem Außendurchmesser des Spritzgießteils (3) entspricht, **dadurch gekennzeichnet,** daß die Formteile (1,2) und der Haltering (4) eine Zentriereinheit bilden und der Haltering (4) auf einer parallel zur Hauptachse verlaufenden Traverse (5) exzentrisch angeordnet sowie axial verschiebbar und um die Achse der Traverse (5) radial verschwenkbar ist und der Innendurchmesser des Halterings (4) eine Haltegeometrie (6,7,8) zum sicheren Halten des Spritzgießteils (3) aufweist.

2. Vorrichtung nach Anspruch 1, **dadurch gekennzeichnet,** daß zwei oder mehrere Halteringe (4) wechselseitig im Spritzgießzyklus vorgesehen sind.

3. Vorrichtung nach Anspruch 1 und 2, **dadurch gekennzeichnet,** daß die Halteringe (4) in einer oder mehreren Ebenen parallel zueinander angeordnet sind.

4. Vorrichtung nach Anspruch 1 bis 3 oder einem derselben, **dadurch** **gekennzeichnet,** daß die Halteringe (4) nach Art eines Trommelrevolvers ausgebildet sind.

5. Vorrichtung nach Anspruch 1 bis 4 oder einem derselben, **dadurch** **gekennzeichnet,** daß zwei oder mehrere in herausbewegter Stellung axial nebeneinander angeordnete Halteringe (4) in eine gemeinsame Arbeitsebene innerhalb der Form hineinbewegbar sind.

6. Vorrichtung nach den Ansprüchen 1 bis 5 oder einem derselben, **dadurch gekennzeichnet,** daß die Innendurchmesser der Halteringe (4) mit umlaufenden Nuten (6) oder Vosrprüngen (7) versehen sind.

7. Vorrichtung nach den Ansprüchen 1 bis 6 oder einem derselben, **dadurch gekennzeichnet,** daß am Innendurchmesser der Halteringe (4) radial bewegliche Haltestifte (8) angeordnet sind.

## Claims

1. An apparatus for removing injection moulded parts, particularly optical data carriers, from a two-part or multi-part injection mould with mould parts (1, 2) centred and adapted for mutual displacement in respect of each other, a retaining ring (4) for supporting injection moulded parts (3) and adapted for radial movement in the mould separation plane being disposed between the mould parts (1, 2), the inside diameter of the retaining ring (4) corresponding to the outside diameter of the injection moulded part (3), characterised in that the mould parts (1, 2) and the retaining ring (4) form a centring unit and in that the retaining ring (4) is disposed eccentrically on a cross-member (5) extending parallel with the main axis and is adapted for axial displacement and to be radially pivotable about the axis of the cross-member (5), the inside diameter of the retaining ring (4) having a retaining geometry (6, 7, 8) for securely holding the injection moulded part (3).

2. An apparatus according to Claim 1, characterised in that two or more retaining rings (4) are provided in alternating manner in the injection moulding cycle.

3. An apparatus according to Claim 1 and 2, characterised in that the retaining rings (4) are disposed parallel with one another in one or a plurality of planes.

4. An apparatus according to Claim 1 to 3 or any one thereof, characterised in that the retaining rings (4) are constructed in the manner of a barrel revolver.

5. An apparatus according to Claim 1 to 4 or any one thereof, characterised in that in their moved-out position, two or a plurality of adjacently disposed retaining rings (4) are adapted for movement into a common working plane within the mould.

6. An apparatus according to Claims 1 to 5 or any one thereof, characterised in that the inside diameters of the retaining rings (4) are provided with encircling grooves (6) or projections (7).

7. An apparatus according to Claims 1 to 6 or any one thereof, characterised in that radially movable retaining pegs (8) are disposed on the inside diameter of the retaining rings (4).

## Revendications

1. Dispositif destiné à enlever des objets moulés par injection, notamment des supports optiques de données, d'un moule d'injection en deux ou plus de deux parties, ce moule comportant des éléments (1, 2) de moule qui peuvent se déplacer l'un par rapport à l'autre et vers l'autre et qui sont mutuellement centrés, une bague (4) de retenue, mobile radialement, destinée à maintenir la pièce moulée (3) et dont le diamètre intérieur correspond au diamètre extérieur de cette pièce (3), étant disposée entre ces éléments de moule, dans le plan de séparation du mouie, dispositif caractérisé en ce que les éléments (1, 2) de moule et la bague (4) de retenue forment un ensemble de centrage ; cette bague (4) est montée excentriquement sur une traverse (5) parallèle à l'axe principal et peut être déplacée axialement et pivoter radialement sur l'axe de cette traverse (5), et le pourtour intérieur de la bague de retenue (4) présente une configuration et des éléments géométriques (6, 7, 8) d'arrêt, destinés à maintenir la pièce moulée (3) de manière sûre.

2. Dispositif selon la revendication 1, caractérisé en ce que deux ou plus de deux bagues(4)de retenue sont prévues pour servir alternativement dans le cycle de moulage par injection.

3. Dispositif selon les revendications 1 et 2, caractérisé en ce que les bagues (4) de retenue sont disposées mutuellement parallèles dans un ou plusieurs plans.

4. Dispositif selon les revendications 1 à 3 ou selon l'une d'elles, caractérisé en ce que les bagues (4) de retenue sont conformées à la manière d'un revolver en tambour.

5. Dispositif selon les revendications 1 à 4 ou selon l'une d'elles, caractérisé en ce que deux ou plus de deux bagues (4) de retenue, qui sont disposées axialement côte à côte dans leur position rabattue vers l'extérieur, peuvent être amenées dans un plan de fonctionnement commun à l'intérieur du moule.

6. Dispositif selon les revendications 1 à 5 ou selon l'une d'elles, caractérisé en ce que le pourtour intérieur des bagues (4) de retenue comporte sur toute sa longueur une ou des gorge(s) (6) ou une des nervure(s) (7).

7. Dispositif selon les revendications 1 à 6 ou l'une d'elles, caractérisé en ce que des broches (8) d'arrêt, mobiles axialement, sont disposées sur le pourtour intérieur des bagues (4) de retenue (4).
